# EUROPÄISCHE PATENTSCHRIFT

(11) **EP 3 933 679 B1**
(45) Veröffentlichungstag und Bekanntmachung des Hinweises auf die Patenterteilung: **03.01.2024**
(21) Anmeldenummer: 21181325.8
(22) Anmeldetag: 24.06.2021
(51) Int. Cl.: G06V 10/22, G06V 20/52, G06V 40/16, A47L 15/00, A47L 15/42

(54) **BILDVERARBEITUNGSVORRICHTUNG, SPÜLGERÄT UND VERFAHREN ZUM VERARBEITEN EINES KAMERAROHBILDS**
IMAGE PROCESSING DEVICE, RINSING DEVICE AND METHOD FOR PROCESSING A RAW CAMERA IMAGE
DISPOSITIF DE TRAITEMENT DES IMAGES, LAVE-VAISSELLE ET PROCÉDÉ DE TRAITEMENT D'UNE IMAGE BRUTE DE CAMÉRA

(30) Priorität: 01.07.2020 DE 102020117342
(43) Veröffentlichungstag der Anmeldung: 05.01.2022
(73) Patentinhaber: Miele & Cie. KG, 33332 Gütersloh (DE)
(72) Erfinder: Riedenklau, Eckard, 33647 Bielefeld (DE)

(56) Entgegenhaltungen:
- DE-A1- 10 048 081
- DE-A1-102018 009 311
- DE-B3-102019 109 859
- Anonymous: "Surveillance: Evidence", , 6. Februar 2009 (2009-02-06), Seiten 379-379, XP055862895, Gefunden im Internet: URL:https://books.google.nl/books?id=YTdWr X-4qAIC&pg=PA379&dq=mask+region+in+image+p rivacy+data+protection&hl=en&sa=X&ved=2ahU KEwjfouCf9p_0AhUR8LsIHRMEDnAQ6AF6BAgLEAI#v =onepage&q=mask%20region%20in%20image%20pr ivacy%20data%20protection&f=false [gefunden am 2021-11-17]

## Beschreibung

Die Erfindung betrifft eine Bildverarbeitungsvorrichtung zum Verarbeiten eines Kamerarohbilds einer in einer Tür eines Spülgeräts angeordneten Kameraeinheit, ein Spülgerät und ein Verfahren zum Verarbeiten eines Kamerarohbilds.

Der Spülinnenraum eines Spülgeräts kann mittels einer Kamera und einer entsprechenden Bildauswertung überwacht werden, um den Beladungsgrad, Beladungsarten, Anschmutzungsgrad und -arten, etc. zur Verbesserung der Spülperformance optisch zu überwachen und auszuwerten und automatisiert geeignete Maßnahmen oder auch Gegenmaßnahmen ergreifen zu können.

Die DE 10 2018 009 311 A1 offenbart ein Spülgerät mit einer in der Tür des Spülgeräts angeordneten Kameraeinheit und einem Neigungssensor zum Erfassen des Neigungswinkels der Tür. Um eine vollständige Erfassung des Spülraums zu realisieren werden dabei mehrere während des Türschließens aufgenommene Bilder sowie ihre jeweils zugehörigen Neigungswinkel zusammen ausgewertet, und daraus eine Information über das im Spülraum befindliche Spülgut zu ermitteln.

Der Erfindung stellt sich die Aufgabe eine verbesserte Bildverarbeitungsvorrichtung zum Verarbeiten eines Kamerarohbilds einer an einem Spülgerät angeordneten Kameraeinheit, ein verbessertes Spülgerät und ein verbessertes Verfahren zum Verarbeiten eines Kamerarohbilds zu schaffen.

Erfindungsgemäß wird diese Aufgabe durch eine Bildverarbeitungsvorrichtung, ein Spülgerät und Verfahren zum Verarbeiten eines Kamerarohbilds mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben dem Schutz der Privatsphäre von Nutzern in der bedarfsgerechten Aufnahme von Kamerabildern in Spülgeräten zur Auswertung der Bilder mittels datengetriebener Algorithmen.

Es wird eine Bildverarbeitungsvorrichtung zum Verarbeiten eines Kamerarohbilds einer in einer Tür eines Spülgeräts angeordneten Kameraeinheit vorgestellt, wobei die Bildverarbeitungsvorrichtung eine Einleseeinrichtung aufweist, die ausgebildet ist, um ein das Kamerarohbild repräsentierendes Bildsignal über eine Schnittstelle zu der Kameraeinheit einzulesen. Zudem ist die Einleseeinrichtung ausgebildet, um ein einen Neigungswinkel der Tür repräsentierendes Neigungssignal über eine Schnittstelle zu einem Neigungssensor einzulesen. Außerdem umfasst die Bildverarbeitungsvorrichtung eine Maskierungseinrichtung, die ausgebildet ist, um unter Verwendung des Bildsignals und des Neigungssignals mindestens einen Bildbereich des Kamerarohbilds zu maskieren und das maskierte Kamerarohbild als Kamerabild an eine Schnittstelle zu einer Anzeigeeinrichtung oder einer Auswertungseinrichtung bereitzustellen.

Bei dem Spülgerät kann es sich beispielsweise um einen Geschirrspüler handeln, der eine Kameraeinheit zum Überwachen von Beladungsträgern, wie zum Beispiel Körbe für Spülgut oder eine Besteckschublade, umfasst. Die Kameraeinheit kann in der Tür des Spülgeräts mit Blickrichtung in einen Spülinnenraum angeordnet sein. Bei geschlossener Tür kann beispielsweise ein Großteil des Spülinnenraumes und eines Unterkorbes von der Kameraeinheit erfasst werden. Um zusätzlich auch Teile eines Oberkorbes und die Besteckschublade zu erfassen, können auch bei geöffneter Tür Bilder gemacht werden. Dazu kann der Neigungswinkel der Tür von einem Neigungssensor erfasst und bereitgestellt werden. Durch einen solchen Perspektivwechsel können zum Beispiel bei voll geöffneter Tür die Besteckschublade oder der Oberkorb samt Beladung von unten erfasst und bestimmt werden. Die Bildverarbeitungsvorrichtung kann für ein softwarebasiertes und türneigungswinkelabhängiges Maskieren von Kamerabildern verwendet werden.

Primäre Aufgabe der Kameraeinheit, die auch als Kamera bezeichnet werden kann, kann die Aufnahme von Bildern des Spülinnenraumes und der Körbe samt Beladung sein, mit dem Zweck der Bildauswertung, beispielsweise zum Bestimmen von Beladungs- und Verschmutzungsgrad oder zur Beladungserkennung. Dabei kann das visuelle Erfassen von Nutzern beim Be- und Entladen der Maschine unter Umständen für die Auswerteverfahren störend wirken. Daher werden die von der Kameraeinheit erfassten Kamerarohbilder von der hier vorgestellten Bildverarbeitungsvorrichtung verarbeitet, um vorteilhafterweise Objekte in der Umgebung des Spülgeräts, die für die Auswerteverfahren irrelevant sind, bereits vor dem Anzeigen in einer Anzeigeeinrichtung, z.B. einer Anzeigeeinrichtung des Spülgeräts oder einer externen Anzeigeeinrichtung, oder Auswertung durch eine Auswertungseinrichtung zu maskieren. Mittels softwaregestützter Maskierungsverfahren werden Bildinhalte vorteilhafterweise auf ein für eine Bildauswertung nützliches Minimum reduziert und das Erfassen von Ansichten oder Teilansichten von Nutzern auf ein Minimum reduziert oder sogar gänzlich ausgeschlossen.

Hierbei können unterschiedliche Ausbaustufen einen sparsamen Einsatz der nötigen Hardwareressourcen, wie zum Beispiel Prozessor, Speicher, etc., erlauben, um den Betrieb im Gerät zu ermöglichen und die Übertragung unmaskierter Bilder in beispielsweise eine Cloudumgebung möglichst zu vermeiden, da die geometriebasierten Anteile vergleichsweise sparsam noch im Gerät erfolgen können. Auch die Verwendung von sogenannten Haar-Wavelets oder Eigenfaces zur Gesichtserkennung kann mit relativ begrenzten Hardwareressourcen ermöglicht werden.

Gemäß einer Ausführungsform kann die Maskierungseinrichtung eine einem ersten Neigungswinkel der Tür zugeordnete erste Maske und zumindest eine einem weiteren Neigungswinkel der Tür zugeordnete weitere Maske zum Maskieren des Kamerarohbilds umfassen. Der erste Neigungswinkel kann zum Beispiel einer vollständigen Öffnung der Tür mit 90° entsprechen, während der zweite Neigungswinkel einer halb geschlossenen Stellung der Tür bei beispielsweise 45° entsprechen kann. In Abhängigkeit vom Türneigungswinkel werden bereits vordefinierte Maskierungen für die äußeren Bildbereiche des Kamerarohbildes angewendet werden. angewendet.

Da der Neigungswinkel, der auch als Türwinkel bezeichnet werden kann aufgrund eines in der Tür angeordneten Neigungssensors jederzeit bekannt oder erfassbar ist, wird das Kamerarohbild mit einer zu jedem Neigungswinkel passenden Maske versehen werden, sodass in einem auf einer Anzeigeeinrichtung angezeigten oder einer Auswertungseinrichtung bereitgestellten Kamerabild nur noch die Teile des Bildes sichtbar sind, die eine Türöffnung des Gerätes und damit nur den Spülinnenraum abbilden. Eine Maske kann sich beispielsweise auf einen vorbestimmten Bereich eines Bildsensors beziehen. Vorteilhafterweise wird dadurch eine Feinabstimmung zwischen vordefinierten Masken, die an Größe und Form des Spülgeräts angepasst sein können, und einem Öffnungsgrad der Tür, beziehungsweise der Entfernung der Kameraeinheit vom Spülinnenraum, durchgeführt.

Zudem ist die Maskierungseinrichtung ausgebildet, um einen eine Umgebung außerhalb eines Gehäuserahmens des Spülgeräts abbildenden Bereich als den Bildbereich des Kamerarohbilds zu maskieren. Die Maskierungseinrichtung kann zum Beispiel alles außerhalb des erfassten Gehäuserahmens als Umgebung definieren und eine entsprechende Maske anwenden. Das heißt, das Kamerabild kann durch den äußeren Gehäuserahmen des Geschirrspülers begrenzt werden, wodurch vorteilhafterweise Ansichten oder Teilansichten von Nutzern im Sichtfeld der Kameraeinheit weitgehend maskiert und damit vermieden werden können.

Gemäß einer weiteren Ausführungsform kann die Maskierungseinrichtung ausgebildet sein, um unter Verwendung des Bildsignals eine Objekterkennung durchzuführen, um ein von dem Kamerarohbild abgebildetes und einen vorbestimmten Typ aufweisendes bewegliches Objekt zu erkennen. Beispielsweise kann die Maskierungseinrichtung bewegliche Objekte wie Gehäuserahmen des Spülgeräts unterscheiden und infolge der Objekterkennung eine entsprechende Maske anwenden. Das hat den Vorteil, dass ein Erkennen und ein auf das Erkennen folgendes Maskieren unabhängig von der Geometrie des Spülgeräts durchgeführt werden kann.

Dabei kann die Maskierungseinrichtung ausgebildet sein, um einen das Objekt abbildenden Bereich als einen weiteren Bildbereich zu maskieren, wenn der Typ eine Person kennzeichnet. Die Maskierungseinrichtung kann beispielsweise unterscheiden, ob die Kameraeinheit einen zum Beladen oder Entladen ausgefahrenen Korb erfasst oder eine Person. Während ein Korb als Teil des Spülgeräts erkannt und ohne Maskierung in einem Kamerabild abgebildet werden kann, kann bei Erkennen einer Person eine entsprechende Maske angewandt und die Person maskiert werden. Mit anderen Worten kann über auf die Geometrie eines Geschirrspülers ausgerichtete Verfahren hinaus eine geräteunabhängigere Erkennung von Menschen mittels datengetriebener Algorithmen durchgeführt werden. Hierzu können zum Beispiel Objekterkennungen wie beispielsweise das sogenannte PoseNet für Menschen verwendet werden, oder das sogenannte FaceDetection für das spezielle Erkennen von Gesichtern oder das sogenannte SegNet zum Segmentieren von Ansichten oder Teilansichten der Nutzer. Sofern einer der idealerweise im Gerät operierenden Algorithmen einen oder mehrere Menschen, ein oder mehrere Gesichter oder Regionen mit Mensch-Label liefern, kann die identifizierte Ansicht beispielsweise mit weißem Rauschen ausgeblendet werden. Ein ungewolltes und unnötiges Erfassen von Ansichten der Nutzer beim Be- und Entladen des Spülgeräts, das auch als Maschine bezeichnet werden kann, wird somit vorteilhafterweise verhindert. Die Privatsphäre und der Datenschutz eines Nutzers kann dadurch vorteilhafterweise trotz fortlaufender Kameraaufnahmen geschützt werden. Auch ein persönliche Empfinden der Nutzer einer Videoüberwachung ausgesetzt zu sein, kann abgeschwächt oder gänzlich eliminiert werden.

Gemäß einer weiteren Ausführungsform kann die Maskierungseinrichtung ausgebildet sein, um das maskierte Kamerarohbild nicht bereitzustellen, wenn der Typ eine Person kennzeichnet. Beispielsweise kann bei Erkennen einer Person oder eines Gesichts das jeweilige Kamerarohbild gar nicht erst weiter verwendet, sondern komplett verworfen werden. Vorteilhafterweise kann auch durch dieses Vorgehen die Privatsphäre eines Nutzers geschützt werden.

Gemäß einer weiteren Ausführungsform kann die Maskierungseinrichtung ausgebildet sein, um einen das Objekt abbildenden Bereich des Kamerarohbilds zu demaskieren, wenn der Typ einen Teil des Spülgeräts kennzeichnet. Beispielsweise können die jeweiligen winkelabhängigen Maskierungen etwas weniger restriktiv ausgeprägt definiert werden. Die winkelabhängigen Bildmasken können so definiert werden, dass ausgefahrene Körbe trotz Maskierung auch außerhalb der begrenzenden Gehäuseteile des Geschirrspülers noch sichtbar sind. Vorteilhafterweise können so auch ausgefahrene Spülkörbe im Kamerabild dargestellt und ihr Beladungszustand dadurch unabhängig von ihrer Position überwacht werden.

Zudem kann die Maskierungseinrichtung ausgebildet sein, um unter Verwendung des Bildsignals eine Hautfarbendetektion durchzuführen und die Objekterkennung unter Verwendung eines Ergebnisses der Hautfarbendetektion durchzuführen. Beispielsweise kann ein moderner Hautfarbendetektor, der möglichst sämtliche Ethnien erfassen kann, dabei helfen, den Einsatz der rechenintensiveren, datengetriebenen Algorithmen weiter zu begrenzen. Das hat den Vorteil, dass die Personenerkennung erleichtert und der Energieaufwand minimiert werden kann.

Zudem wird ein Spülgerät mit einer in einer Tür angeordneten Kameraeinheit und einer Variante der zuvor vorgestellten Bildverarbeitungsvorrichtung vorgestellt. Eine solche Kombination hat den Vorteil, dass alle zuvor genannten Vorteile optimal umgesetzt werden können. Insbesondere bei der Anwendung von vordefinierten Masken ist eine Kombination mit einem Spülgerät besonders vorteilhaft, da die Geometrie des Spülgeräts in die Definition der Masken einbezogen werden kann.

Gemäß einer Ausführungsform kann das Spülgerät eine Anzeigeeinrichtung zum Anzeigen des Kamerabilds umfassen. Beispielsweise kann die Anzeigeeinheit in Form eines Displays an einem Außengehäuse des Spülgeräts angeordnet sein, damit Nutzer vorteilhafterweise das im Spülinnenraum angeordnete Spülgut überwachen können. Zusätzlich oder alternativ kann die Anzeigeeinrichtung auch zum Beispiel in Form einer App in einem mobilen Gerät, wie einem Smartphone oder einem Tablet, angeordnet sein.

Gemäß einer weiteren Ausführungsform kann das Spülgerät eine Auswertungseinrichtung zum Auswerten des Kamerabilds umfassen. Die Auswertung des Kamerabildes kann alternativ oder zusätzlich aber auch durch eine externe Auswertungseinrichtung, die auch durch eine Cloudumgebung bereitgestellt sein kann, erfolgen. Das Auswerten des Kamerabildes kann beispielsweise der Ermittlung eines oder mehrerer Merkmale wie Beladungsgrad, Beladungsart, Anschmutzungsgrad oder Anschmutzungsart dienen.

Zudem wird ein Verfahren zum Verarbeiten eines Kamerarohbilds einer in einer Tür eines Spülgeräts angeordneten Kameraeinheit vorgestellt. Dabei umfasst das Verfahren einen Schritt des Einlesens eines das Kamerarohbild repräsentierenden Bildsignals über eine Schnittstelle zu einer Kameraeinheit, einen Schritt des Einlesens eines einen Neigungswinkel der Tür repräsentierenden Neigungssignals über eine Schnittstelle zu einem Neigungssensor, einen Schritt des Maskierens eines Bildbereichs des Kamerarohbilds unter Verwendung des Bildsignals und des Neigungssignals und einen Schritt des Bereitstellens des maskierten Kamerarohbilds als Kamerabild für eine Anzeigeeinrichtung undloder für eine Auswertungseinrichtung.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Auch wenn der beschriebene Ansatz anhand eines Haushaltgeräts beschrieben wird, kann die hier beschrieben Vorrichtung oder das Verfahren entsprechend im Zusammenhang mit einem gewerblichen oder professionellen Gerät eingesetzt werden.

Ein Ausführungsbeispiel der Erfindung ist in den Zeichnungen rein schematisch dargestellt und wird nachfolgend näher beschrieben. Es zeigt
- Figur 1: eine schematische Darstellung einer Bildverarbeitungsvorrichtung gemäß einem Ausführungsbeispiel;
- Figur 2: eine perspektivische Außenansicht eines Ausführungsbeispiels eines Spülgeräts mit einer Bildverarbeitungsvorrichtung;
- Figur 3: ein Ausführungsbeispiel eines Kamerarohbilds aus einem ersten Neigungswinkel;
- Figur 4: ein Ausführungsbeispiel eines Kamerabilds mit einer ersten Maske;
- Figur 5: eine perspektivische Außenansicht eines Ausführungsbeispiels eines Spülgeräts mit einer Bildverarbeitungsvorrichtung und einer in einem weiteren Neigungswinkel geneigten Tür;
- Figur 6: ein Ausführungsbeispiel eines Kamerarohbilds aus einem weiteren Neigungswinkel;
- Figur 7: ein Ausführungsbeispiel eines Kamerabilds mit einer zweiten Maske;
- Figur 8: eine perspektivische Außenansicht eines Ausführungsbeispiels eines Spülgeräts mit ausgefahrenem Oberkorb;
- Figur 9: ein Ausführungsbeispiel eines Kamerarohbilds mit ausgefahrenem Oberkorb;
- Figur 10: ein Ausführungsbeispiel eines Kamerabilds mit ausgefahrenem Oberkorb und einer anderen Maske;
- Figur 11: eine perspektivische Außenansicht eines Ausführungsbeispiels eines Spülgeräts;
- Figur 12: ein Ausführungsbeispiel eines Kamerarohbilds;
- Figur 13: ein Ausführungsbeispiel eines Kamerabilds mit einer anderen Maske;
- Figur 14: eine perspektivische Außenansicht eines Ausführungsbeispiels eines Spülgeräts mit einer in einem weiteren Neigungswinkel geneigten Tür und ausgefahrenem Oberkorb;
- Figur 15: ein Kamerarohbild mit ausgefahrenem Oberkorb;
- Figur 16: ein Kamerabild mit einer zusätzlichen Maske; und
- Figur 17: ein Ablaufdiagramm eines Ausführungsbeispiels eines Verfahrens zum Verarbeiten eines Kamerarohbilds einer in einer Tür eines Spülgeräts angeordneten Kameraeinheit.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

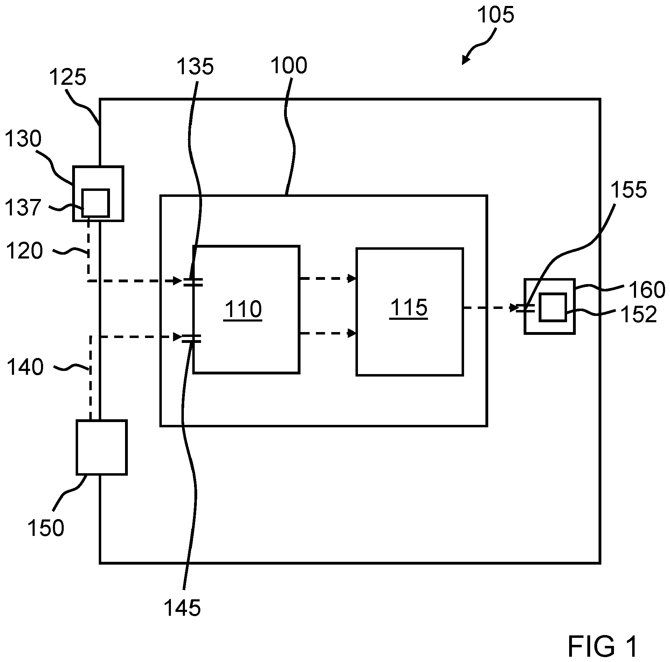

Figur 1 zeigt eine schematische Darstellung einer Bildverarbeitungsvorrichtung 100 gemäß einem Ausführungsbeispiel. Die Bildverarbeitungsvorrichtung 100 ist in diesem Ausführungsbeispiel in einem Spülgerät 105 angeordnet und umfasst eine Einleseeinrichtung 110 und eine Maskierungseinrichtung 115. Die Einleseeinrichtung 110 ist ausgebildet, um ein Bildsignal 120 von einer in einer Tür 125 des Spülgeräts 105 angeordneten Kameraeinheit 130 über eine Schnittstelle 135 zu der Kameraeinheit 130 einzulesen. Dabei repräsentiert das Bildsignal 120 ein von der Kameraeinheit 130 aufgenommenes Kamerarohbild 137. Außerdem ist die Einleseeinrichtung 110 ausgebildet, um ein Neigungssignal 140 über eine Schnittstelle 145 zu einem Neigungssensor 150, der beispielhaft ebenfalls in der Tür 125 angeordnet ist, einzulesen. Das Neigungssignal 140 repräsentiert dabei einen vom Neigungssensor 150 erfassten Neigungswinkel der Tür 125.

Das eingelesene Bildsignal 120 und das Neigungssignal 140 werden für die Maskierungseinrichtung 115 bereitgestellt, wobei diese ausgebildet ist, um unter Verwendung des Bildsignals 120 und des Neigungssignals 140 mindestens einen Bildbereich des Kamerarohbilds 137 zu maskieren und das maskierte Kamerarohbild als Kamerabild 152 an eine Schnittstelle 155 zu einer Anzeigeeinrichtung 160 undloder zu einer hier nicht gezeigten Auswertungseinrichtung bereitzustellen.

Wird nun von der Kameraeinheit 130 ein Kamerarohbild 137 aufgenommen, dann wird das entsprechende Bildsignal 120 über die Schnittstelle 135 von der Einleseeinrichtung 110 eingelesen und zusammen mit dem ebenfalls eingelesenen Neigungssignal 140 des an der Tür 125 angeordneten Neigungssensors 150 für die Maskierungseinrichtung 115 bereitgestellt. Je nach Größe des Neigungswinkels der Tür 125 ist die Kameraeinheit 130 mit unterschiedlicher Entfernung und Ausrichtung in Bezug auf das Spülgerät 105 angeordnet. Um einen eine Umgebung des Spülgeräts 105 abbildenden Bereich zu maskieren und gleichzeitig alle zum Spülgerät 105 zugehörigen Elemente im Kamerabild 152 anzuzeigen, wird das Neigungssignal 140 als Grundlage für die Auswahl einer entsprechenden Maske der Maskierungseinrichtung 115 verwendet. Die Maskierungseinrichtung 115 legt entsprechend dem Neigungswinkel der Tür 125 eine Maske über das Kamerarohbild 137 und stellt das so maskierte Kamerarohbild als Kamerabild 152 für die Anzeigeeinrichtung 160 undloder einer Auswertungseinrichtung bereit. Auf dem Kamerabild 152 ist somit nur noch das Spülgerät 105 abgebildet, während eine Umgebung des Spülgeräts 105 sowie möglicherweise darin befindliche Personen aufgrund der Maskierung nicht erkennbar sind.

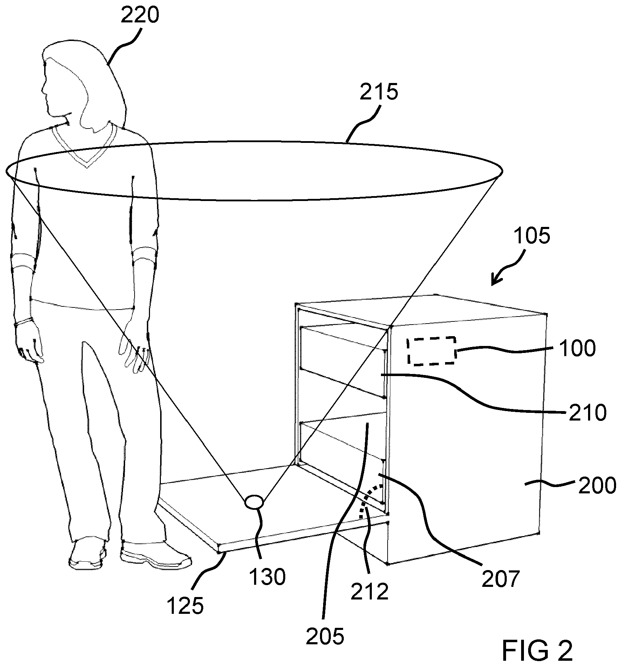

Figur 2 zeigt eine perspektivische Außenansicht eines Ausführungsbeispiels eines Spülgeräts 105 mit einer Bildverarbeitungsvorrichtung 100. Dabei kann es sich um das in Figur 1 beschriebene Spülgerät und die in Figur 1 beschriebene Bildverarbeitungsvorrichtung handeln.

Das Spülgerät 105 umfasst in diesem Ausführungsbeispiel einen Gehäuserahmen 200, sowie lediglich beispielhaft einen in einem Spülinnenraum 205 angeordneten Unterkorb 207 und einen Oberkorb 210. Da die Tür 125 des Spülgeräts 105 in einem ersten Neigungswinkel 212 von etwa 90° vollständig geöffnet dargestellt ist, ist das Sichtfeld 215 der in der Tür 125 angeordneten Kameraeinheit 130 im Wesentlichen vertikal nach oben ausgerichtet. Dabei erfasst es neben dem Oberkorb 210 auch teilweise eine neben dem Spülgerät 105 stehende Person 220. Primäre Aufgabe der Kameraeinheit 130 ist die Aufnahme von Kamerarohbildern zum Erfassen des Spülinnenraumes 205 und der Körbe samt Beladung mit dem Zweck der Bildauswertung. Daher ist die visuelle Erfassung einer Person 220 beim Beladen oder Entladen des Spülgeräts 105 nicht gewollt gegebenenfalls für die Auswerteverfahren unter Umständen sogar störend. Als softwareseitige Lösung umfasst das Spülgerät 105 darum in diesem Ausführungsbeispiel eine Bildverarbeitungsvorrichtung 100, die die computergestützte Auswertung der Bilder begünstigt und zugleich den Schutz der Privatsphäre der Nutzer erhöht. In der hier gezeigten Figur ist die Bildverarbeitungsvorrichtung 100 innerhalb des Spülgeräts 105 angeordnet und dementsprechend nur andeutungsweise dargestellt. Die Kameraeinheit 130 erfasst als Kamerarohbild, wie in Figur 1 beschrieben, ein Bild aller im Sichtfeld 215 angeordneten Elemente und stellt dieses für die Bildverarbeitungsvorrichtung 100 bereit. Die Bildverarbeitungsvorrichtung 100 ist ausgebildet, um entsprechend dem ersten Neigungswinkel 212 das Kamerarohbild zu maskieren und als Kamerabild für eine Anzeigeeinrichtung, wie in Figur 1 beschrieben, und/oder zu einer Auswertungseinrichtung bereitzustellen.

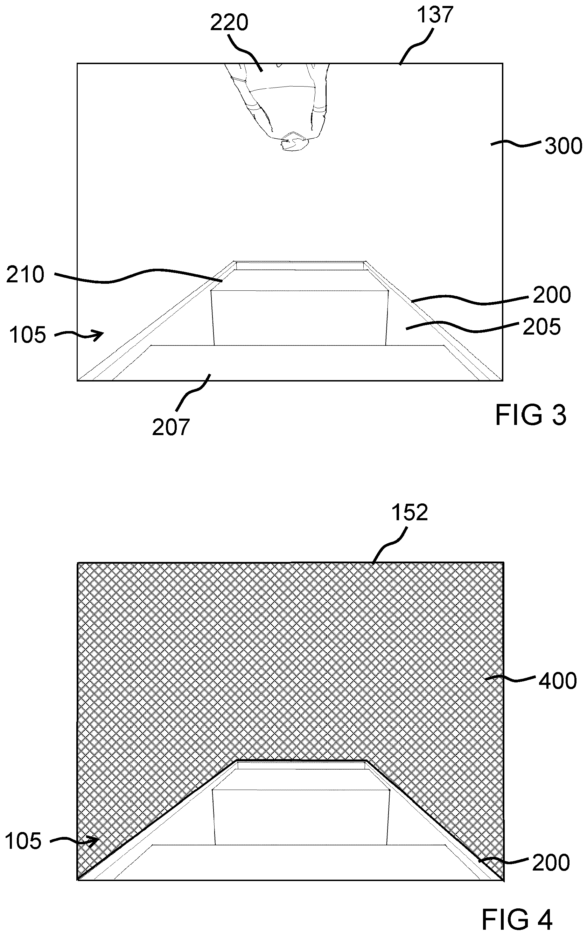

Figur 3 zeigt ein Ausführungsbeispiel eines Kamerarohbilds 137 aus einem ersten Neigungswinkel, wie er in Figur 2 beschrieben wurde.

Gemäß des ersten Neigungswinkels von etwa 90° der in den vorangegangenen Figuren beschriebenen Tür, zeigt das Kamerarohbild 137 in dieser Figur einen Teil des Spülinnenraums 205 mit darin angeordnetem Unterkorb 207 und Oberkorb 210. Zudem ist auf dem Kamerarohbild 137 ein eine Umgebung außerhalb des Gehäuserahmens 200 abbildender Bildbereich 300 mit einer Teilansicht einer Person 220 erfasst.

In Abhängigkeit vom Neigungswinkel, der auch als Türwinkel oder Türneigungswinkel bezeichnet werden kann, ist bereits eine einfache Maskierung der äußeren Bildbereiche des Kamerarohbilds 137 ohne großen Aufwand möglich. Da der Neigungswinkel aufgrund des bereits in der Tür verbauten Neigungssensors, wie er in Figur 1 beschrieben wurde, jederzeit bekannt ist, ist das Kamerarohbild 137 mit einer zum Neigungswinkel passenden Maske versehbar, sodass in einem nächsten Schritt, wie er in der folgenden Figur 4 beschrieben wird, nur noch die Teile des Bildes sichtbar sind, die eine Türöffnung des Spülgeräts 105 und damit nur den Spülinnenraum 205 abbilden.

Figur 4 zeigt ein Ausführungsbeispiel eines Kamerabilds 152 mit einer ersten Maske 400. Dabei kann es sich um ein auf das in Figur 3 beschriebene Kamerarohbild basierendes Kamerabild handeln.

Das in dieser Figur dargestellte Kamerabild 152 entspricht einem maskierten Kamerarohbild, wie es in Figur 3 beschrieben wurde, mit dem Unterschied, dass die in Figur 3 abgebildete Umgebung mit einer ersten Maske 400 maskiert ist. Die erste Maske 400 ist dabei dem in Figur 2 beschriebenen ersten Neigungswinkel zugeordnet. Das heißt, das Kamerabild 152 wird durch den äußeren Gehäuserahmen 200 des Spülgeräts 105 begrenzt, wodurch Ansichten oder Teilansichten von Nutzern, wie beispielsweise die in Figur 2 und in Figur 3 beschriebene Person, im Sichtfeld der Kameraeinheit weitgehend maskiert und damit vermieden werden.

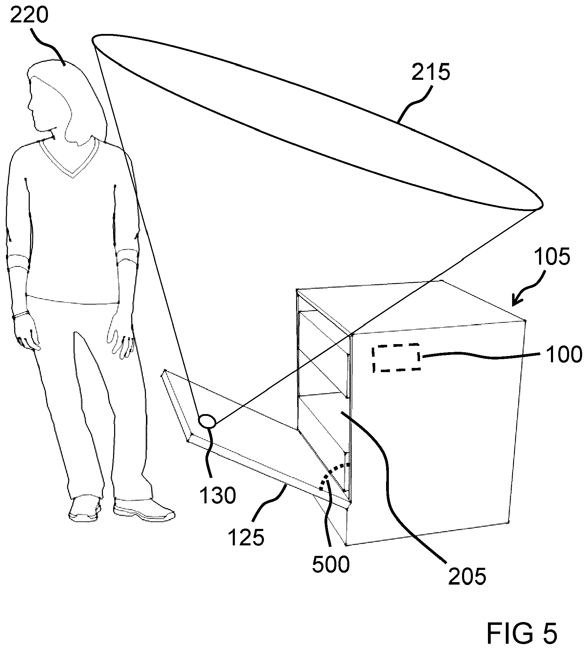

Figur 5 zeigt eine perspektivische Außenansicht eines Ausführungsbeispiels eines Spülgeräts 105 mit einer Bildverarbeitungsvorrichtung 100 und einer in einem weiteren Neigungswinkel 500 geneigten Tür 125. Dabei kann es sich um das in den vorangegangenen Figuren 1 und 2 beschriebene Spülgerät und die beschriebene Bildverarbeitungsvorrichtung handeln.

Die Tür 125 ist in dieser Figur im Unterschied zu dem in Figur 2 beschriebenen ersten Neigungswinkel in einem weiteren Neigungswinkel 500 geöffnet, wobei der weitere Neigungswinkel 500 kleiner ist als der erste Neigungswinkel. Durch die im Vergleich zu Figur 2 veränderte Position der Tür 125 ist auch das Sichtfeld 215 der Kameraeinheit 130 nicht mehr im Wesentlichen senkrecht nach oben, sondern mehr in Richtung des Spülgeräts 105 ausgerichtet. Dennoch wird auch in dieser Figur eine neben dem Spülgerät 105 stehende Person zusätzlich zu dem Spülinnenraum 205 teilweise von der Kameraeinheit 130 erfasst.

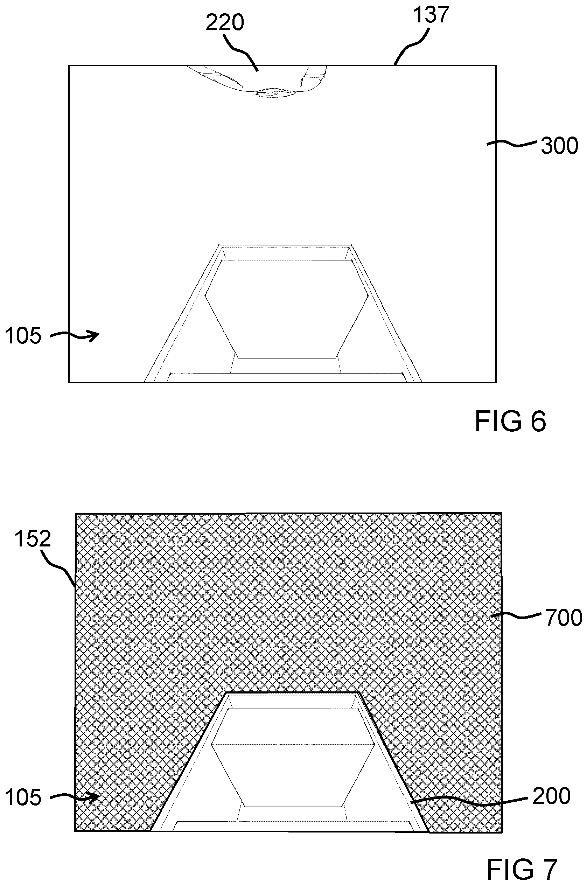

Figur 6 zeigt ein Ausführungsbeispiel eines Kamerarohbilds 137 aus einem weiteren Neigungswinkel, wie in Figur 5 beschrieben. In dieser Figur nimmt das Spülgerät 105 entsprechend der durch den weiteren Neigungswinkel veränderten Position der Kameraeinheit im Vergleich zu dem in Figur 3 beschriebenen Kamerarohbild einen anderen, beispielsweise kleineren, Bereich des Kamerarohbilds 137 ein. Auch von der im Bildbereich 300 angeordneten Person 220 ist nur ein vergleichsweise kleinerer Teil zu sehen. Um den Bildbereich 300 entsprechend dem weiteren Neigungswinkel zu maskieren, muss entsprechend eine Maske angewandt werden, die sich von der in den Figuren 3 und 4 beschriebenen Maske unterscheidet.

Figur 7 zeigt ein Ausführungsbeispiel eines Kamerabilds 152 mit einer weiteren Maske 700. Ähnlich der in Figur 4 beschriebenen ersten Maske, maskiert auch die weitere Maske 700 einen Teilbereich des Bildes, wodurch der in Figur 6 beschriebene Bildbereich außerhalb des Gehäuses 200 des Spülgeräts 105 nicht im Detail zu erkennen ist. Dabei ist die weitere Maske 700 dem in Figur 5 beschriebenen weiteren Neigungswinkel 500 zugeordnet.

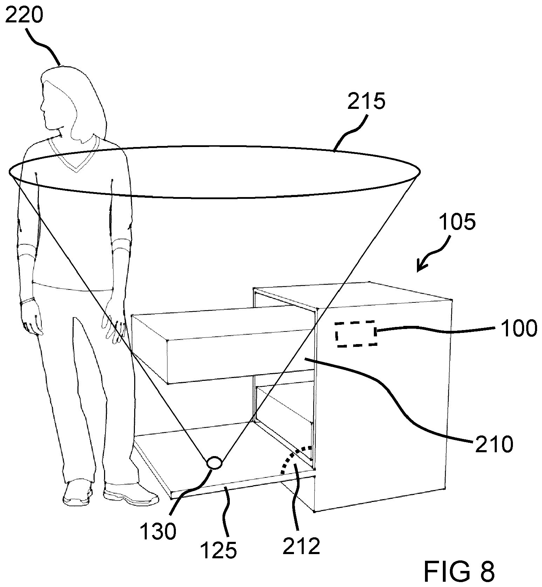

Figur 8 zeigt eine perspektivische Außenansicht eines Ausführungsbeispiels eines Spülgeräts 105, wie es etwa in Figur 1 beschrieben ist, mit ausgefahrenem Oberkorb 210. In dieser Figur 8 ist die Tür 125 im ersten Neigungswinkel 212 vollständig geöffnet, wodurch die Kameraeinheit 130 ein im Wesentlichen senkrecht nach oben gerichtete Sichtfeld 215 aufweist. Da in dieser Figur der Oberkorb 210 ausgefahren dargestellt ist, erfasst die Kameraeinheit 130 den Oberkorb 210 von unten. Außer dem Oberkorb 210 sowie einem Teil des Spülgerät 105 wird dabei auch eine neben dem Spülgerät 105 angeordnete Person 220 teilweise erfasst.

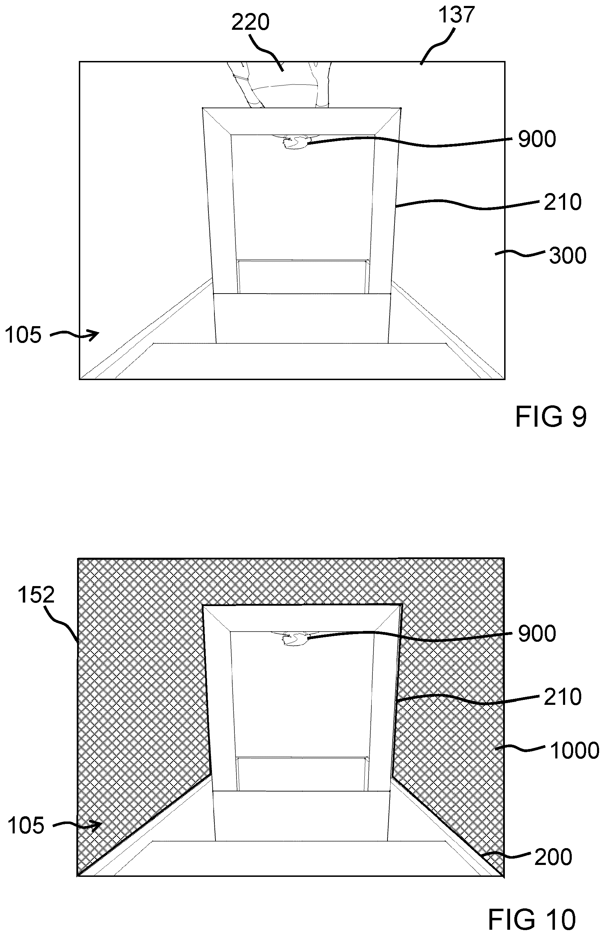

Figur 9 zeigt ein Ausführungsbeispiel eines Kamerarohbilds 137 mit ausgefahrenem Oberkorb 210. Dabei kann es sich um ein der Situation von Figur 8 zugeordnetes Kamerarohbild handeln. In dieser Figur wird der ausgefahrene Oberkorb 210 wie in Figur 8 beschrieben von der Kameraeinheit von unten erfasst. Dabei ragt ein Kopf 900 der neben dem Spülgerät 105 stehenden Person 220 visuell in den Oberkorb 210 hinein. Die Person 220 ist dementsprechend teilweise im Bildbereich 300 angeordnet abgebildet und teilweise in einem von den Außenmaßen des Oberkorbs 210 begrenzten Bereich.

Figur 10 zeigt ein Ausführungsbeispiel eines Kamerabilds 152 mit ausgefahrenem Oberkorb 210 und einer anderen Maske 1000, basierend auf dem Kamerarohbild von Figur 10. In dieser Figur ist ein Bereich des Kamerabilds 152, der die Umgebung außerhalb des Gehäuserahmens 200 abbildet, mit einer anderen Maske 1000 maskiert. Im Unterschied zu der in Figur 4 beschriebenen ersten Maske und der in Figur 7 beschriebenen weiteren Maske wurde in diesem Ausführungsbeispiel der Oberkorb 210 als Teil des Spülgeräts 105 von der Bildverarbeitungsvorrichtung erkannt und eine andere Maske 1000 angewendet, die den Bereich außerhalb des Gehäuserahmens 200 und gleichzeitig außerhalb des Oberkorbs 210 maskiert. Mit anderen Worten sind die jeweiligen winkelabhängigen Maskierungen in diesem Ausführungsbeispiel weniger restriktiv ausgeprägt definiert als in den in den Figuren 2 bis 7 dargestellten Ausführungsbeispielen. In diesem Ausführungsbeispiel sind die winkelabhängigen Bildmasken so definiert, dass auch ausgefahrene Körbe trotz Maskierung auch außerhalb der begrenzenden Gehäuseteile des Spülgeräts 105 noch sichtbar sind. Auch der visuell in den Bereich des Oberkorbs 210 ragende Kopf 900 ist in diesem Ausführungsbeispiel unmaskiert und auf dem Kamerabild 152 sichtbar abgebildet.

In diesem Ausführungsbeispiel ist die Bildverarbeitungsvorrichtung ausgebildet, um über die in den vorangegangenen Figuren beschriebenen und auf die Geometrie des Spülgeräts 105 ausgerichteten Verfahren hinaus eine geräteunabhängige Erkennung von Menschen mittels datengetriebener Algorithmen durchzuführen. Sobald einer der im Gerät operierenden Algorithmen die Person 220 erkennt, wird das Kamerabild komplett verworfen und nicht für eine Anzeigeeinrichtung oder eine Auswertungseinrichtung bereitgestellt. Dabei werden zwei Verfahren sequenziell kombiniert, indem zuerst eine geometriebasierte Maskierung unter Berücksichtigung ausgefahrener Körbe durchgeführt wird und anschließend eine Kontrolle des Kamerabildes 152 mittels einem oder mehrerer Algorithmen oder optional mittels eines merkmalsbasierten Gesichtserkenners, der weniger rechenintensiv ist.

Alternativ kann in einem anderen Ausführungsbeispiel die Maskierungseinrichtung ausgebildet sein, um die Person als solche zu erkennen und den die Person abbildenden Bereich als einen weiteren Bildbereich zu maskieren.

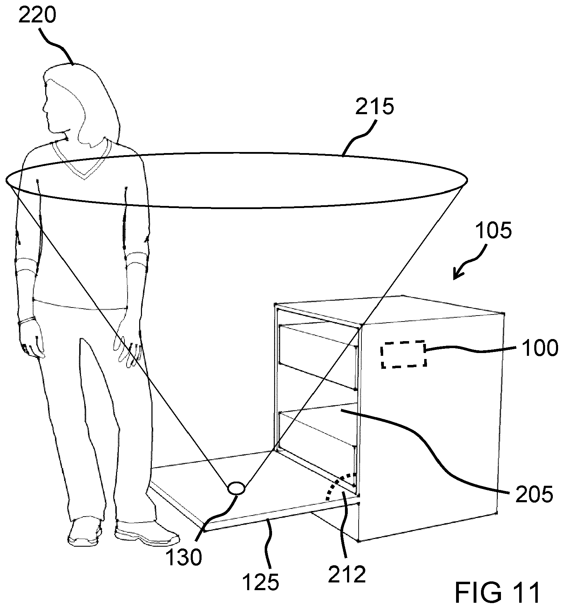

Figur 11 zeigt eine perspektivische Außenansicht eines Ausführungsbeispiels eines Spülgeräts 105. Dabei kann es sich um das in den vorangegangenen Figuren 1, 2, 5 und 8 beschriebene Spülgerät handeln. Ähnlich der Abbildung in Figur 2 und Figur 8, ist auch in dieser Figur das Spülgerät 105 mit einer im ersten Neigungswinkel 212 geöffneten Tür 125 dargestellt. Dadurch ist das Sichtfeld 215 der Kameraeinheit 130 im Wesentlichen senkrecht nach oben gerichtet und erfasst teilweise eine neben dem Spülgerät 105 stehende Person sowie einen Teil des Spülinnenraums 205.

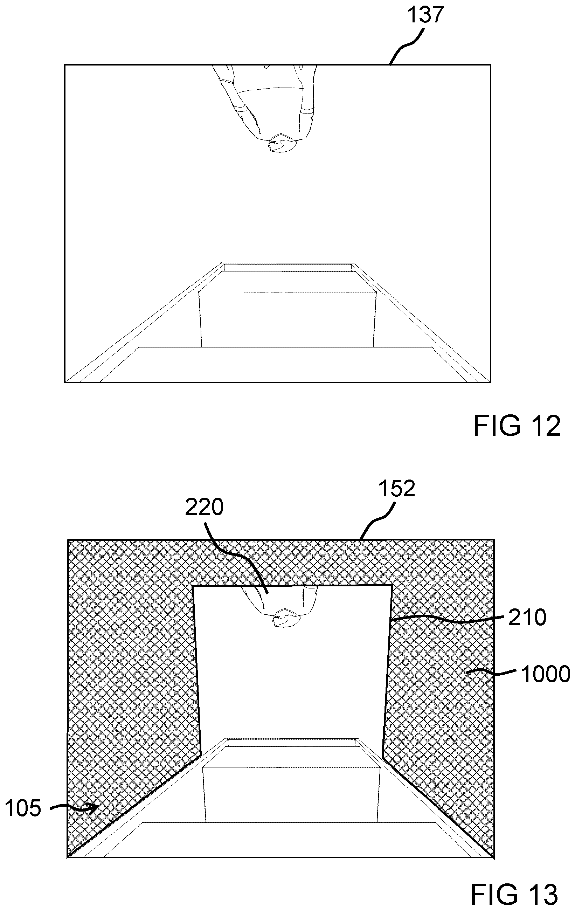

Figur 12 zeigt ein Ausführungsbeispiel eines Kamerarohbilds 137. Das in dieser Figur abgebildete Kamerarohbild 137 entspricht dem in Figur 3 beschriebenen Kamerarohbild.

Figur 13 zeigt ein Ausführungsbeispiel eines Kamerabilds 152 mit einer anderen Maske 1000. Das in dieser Figur abgebildete Kamerabild 152 entspricht dem in Figur 10 beschriebenen Kamerabild, mit dem Unterschied, dass in dieser Figur der Oberkorb 210 nicht ausgefahren abgebildet ist. Trotz des eingefahrenen Oberkorbs 210 ist der Bereich außerhalb des Spülgeräts 105 durch eine andere Maske 1000 maskiert, wodurch ein Teil der Person 220 sichtbar abgebildet ist. In diesem Ausführungsbeispiel ist die Bildverarbeitungsvorrichtung ausgebildet, um im Anschluss an die auf die Geometrie des Spülgeräts 105 ausgerichtete Maskierung eine Objekterkennung durchzuführen. Bei Erkennen der erfassten Person 220 wird diese nachträglich mit einem weißen Rauschen ausgeblendet.

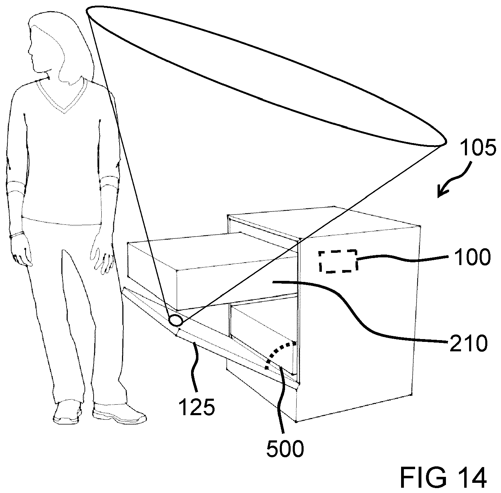

Figur 14 zeigt eine perspektivische Außenansicht eines Ausführungsbeispiels eines Spülgeräts 105 mit einer in einem weiteren Neigungswinkel 500 geneigten Tür 125 und ausgefahrenem Oberkorb 210. Dabei kann es sich um das in den vorangegangenen Figuren 1, 2, 5, 8 und 11 beschriebene Spülgerät handeln.

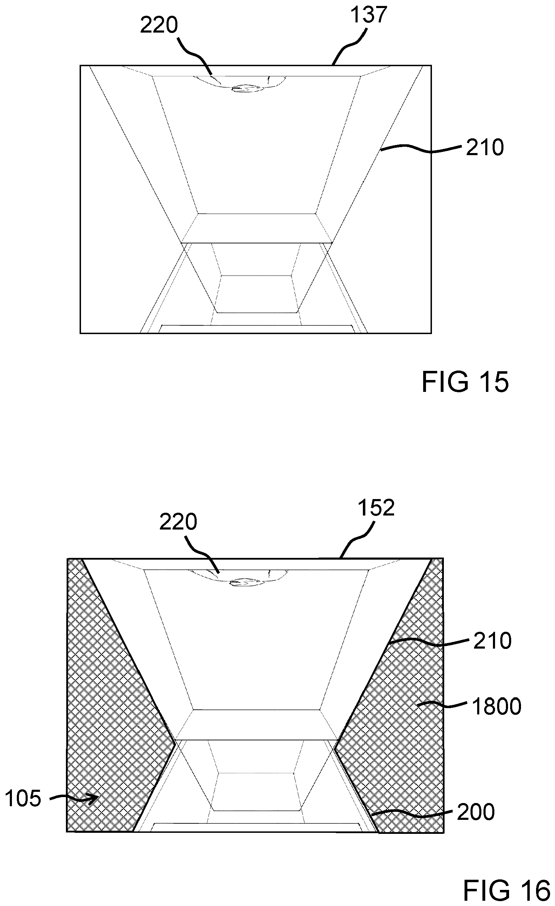

Figur 15 zeigt ein Kamerarohbild 137 mit ausgefahrenem Oberkorb 210. Dabei kann es sich um ein für das Ausführungsbeispiel von Figur 14 erstelltes Kamerarohbild handeln. Dabei entspricht die Bildperspektive und die Anordnung der abgebildeten Elemente dem in Figur 6 beschriebenen Kamerarohbild, mit dem Unterschied, dass der Oberkorb 210 in dieser Figur ausgefahren abgebildet ist und die Person 220 in den Bereich des Oberkorbs 210 visuell hineinragt.

Figur 16 zeigt ein Kamerabild 152 mit einer zusätzlichen Maske 1800. Dabei kann es sich um ein auf Basis des in Figur 15 beschriebene Kamerarohbild erstelltes Kamerabild handeln. Die zusätzliche Maske 1800 ist dem in den Figuren 5 und 14 beschriebenen weiteren Neigungswinkel zugeordnet. Im Unterschied zu der in Figur 7 beschriebenen weiteren Maske 700 maskiert die zusätzliche Maske 1800 einen Bereich außerhalb des Gehäuserahmens 200 und zusätzlich außerhalb des Oberkorbs 210. Dadurch ist das Spülgerät 105 teilweise und der Oberkorb 210 inklusive der visuell hineinragenden Person 220 erkennbar abgebildet.

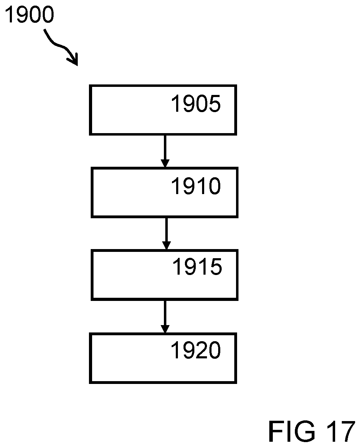

Figur 17 zeigt ein Ablaufdiagramm eines Ausführungsbeispiels eines Verfahrens 1900 zum Verarbeiten eines Kamerarohbilds einer in einer Tür eines Spülgeräts angeordneten Kameraeinheit. Das Verfahren 1900 kann beispielsweise Unter Verwendung einer anhand der vorangegangenen Figuren beschriebenen Bildverarbeitungsvorrichtung durchgeführt werden.

Das Verfahren umfasst einen Schritt des Einlesens 1905 eines das Kamerarohbild repräsentierenden Bildsignals über eine Schnittstelle zu einer Kameraeinheit 130, einen Schritt des Einlesens 1910 eines einen Neigungswinkel der Tür repräsentierenden Neigungssignals über eine Schnittstelle zu einem Neigungssensor, einen Schritt des Maskierens 1915 eines Bildbereichs des Kamerarohbilds unter Verwendung des Bildsignals und des Neigungssignals und einen Schritt des Bereitstellens 1920 des maskierten Kamerarohbilds als Kamerabild für eine Anzeigeeinrichtung undloder eine Auswertungseinrichtung.

## Patentansprüche

1. Bildverarbeitungsvorrichtung (100) zum Verarbeiten eines Kamerarohbilds (137) einer in einer Tür (125) eines Spülgeräts (105) angeordneten Kameraeinheit (130), wobei die Bildverarbeitungsvorrichtung (100) folgende Merkmale aufweist:
eine Einleseeinrichtung (110), die ausgebildet ist, um ein das Kamerarohbild (137) repräsentierendes Bildsignal (120) über eine Schnittstelle (135) zu der Kameraeinheit (130) einzulesen und die ausgebildet ist, um ein einen Neigungswinkel (212; 500) der Tür (125) repräsentierendes Neigungssignal (140) über eine Schnittstelle (145) zu einem Neigungssensor (150) einzulesen, und
eine Maskierungseinrichtung (115), die ausgebildet ist, um unter Verwendung des Bildsignals (120) und des Neigungssignals (140) mindestens einen Bildbereich (300) des Kamerarohbilds (137) zu maskieren, wobei vordefinierte Maskierungen in Abhängigkeit vom Neigungswinkel (212; 500) der Tür (125) angewendet werden, die jeweils derart passend zum Neigungswinkel (212; 500) der Tür (125) ausgebildet sind, dass ein eine Umgebung außerhalb eines Gehäuserahmens (200) des Spülgeräts (105) abbildender Bereich als der Bildbereich (300) des Kamerarohbilds (137) maskiert wird, und um das maskierte Kamerarohbild (137) als Kamerabild (152) an eine Schnittstelle zu einer Anzeigeeinrichtung (160) und/oder einer Auswertungseinrichtung bereitzustellen.

2. Bildverarbeitungsvorrichtung (100) gemäß Anspruch 1, wobei die Maskierungseinrichtung (115) ausgebildet ist, um unter Verwendung des Bildsignals (120) eine Objekterkennung durchzuführen, um ein von dem Kamerarohbild (137) abgebildetes und einen vorbestimmten Typ aufweisendes bewegliches Objekt zu erkennen.

3. Bildverarbeitungsvorrichtung (100) gemäß Anspruch 2, wobei die Maskierungseinrichtung (115) ausgebildet ist, um einen das Objekt abbildenden Bereich als einen weiteren Bildbereich zu maskieren, wenn der Typ eine Person kennzeichnet.

4. Bildverarbeitungsvorrichtung (100) gemäß Anspruch 2 oder 3, wobei die Maskierungseinrichtung (115) ausgebildet ist, um das maskierte Kamerarohbild (137) nicht bereitzustellen, wenn der Typ eine Person kennzeichnet.

5. Bildverarbeitungsvorrichtung (100) gemäß Anspruch 2 oder 3, wobei die Maskierungseinrichtung (115) ausgebildet ist, um einen das Objekt abbildenden Bereich des Kamerarohbilds (137) zu demaskieren, wenn der Typ einen Teil des Spülgeräts (105) kennzeichnet.

6. Bildverarbeitungsvorrichtung (100) gemäß Anspruch 2, wobei die Maskierungseinrichtung (115) ausgebildet ist, um unter Verwendung des Bildsignals (120) eine Hautfarbendetektion durchzuführen und die Objekterkennung unter Verwendung eines Ergebnisses der Hautfarbendetektion durchzuführen.

7. Spülgerät (105) mit einer in einer Tür (125) angeordneten Kameraeinheit (130) und einer Bildverarbeitungsvorrichtung (100) gemäß einem der vorangegangenen Ansprüche.

8. Spülgerät (105) gemäß Anspruch 7, mit einer Anzeigeeinrichtung (160) zum Anzeigen des Kamerabilds (152) und/oder einer Auswertungseinrichtung zum Auswerten des Kamerabilds (152).

9. Verfahren (1900) zum Verarbeiten eines Kamerarohbilds (137) einer in einer Tür (125) eines Spülgeräts (105) angeordneten Kameraeinheit (130), wobei das Verfahren folgende Schritte umfasst:
Einlesen (1905) eines das Kamerarohbild (137) repräsentierenden Bildsignals (120) über eine Schnittstelle (135) zu einer Kameraeinheit (130);
Einlesen (1910) eines einen Neigungswinkel der Tür (125) repräsentierenden Neigungssignals (140) über eine Schnittstelle (145) zu einem Neigungssensor (150);
Maskieren (1915) eines Bildbereichs des Kamerarohbilds (137) unter Verwendung des Bildsignals (120) und des Neigungssignals (140), wobei vordefinierte Maskierungen in Abhängigkeit vom Neigungswinkel (212; 500) der Tür (125) angewendet werden, die jeweils derart passend zum Neigungswinkel (212; 500) der Tür (125) ausgebildet sind, dass ein eine Umgebung außerhalb eines Gehäuserahmens (200) des Spülgeräts (105) abbildender Bereich als der Bildbereich (300) des Kamerarohbilds (137) maskiert wird; und
Bereitstellen (1920) des maskierten Kamerarohbilds (137) als Kamerabild (152) für eine Anzeigeeinrichtung (160) und/oder für eine Auswertungseinrichtung.

10. Computer-Programmprodukt mit Programmcode zur Durchführung des Verfahrens (1900) nach einem der vorangegangenen Ansprüche, wenn das Computer-Programmprodukt auf einer Vorrichtung ausgeführt wird.

## Claims

1. Image processing device (100) for processing a raw camera image (137) of a camera unit (130) arranged in a door (125) of a rinsing device (105), wherein the image processing device (100) has the following features:
a read-in means (110) that is designed to read in an image signal (120), representing the raw camera image (137), via an interface (135) to the camera unit (130) and that is designed to read in an inclination signal (140), representing an inclination angle (212; 500) of the door (125), via an interface (145) to an inclination sensor (150), and
a masking means (115) that is designed to mask at least one image region (300) of the raw camera image (137) using the image signal (120) and the inclination signal (140), wherein predefined maskings are applied as a function of the inclination angle (212; 500) of the door (125), which maskings are in each case designed to match the inclination angle (212; 500) of the door (125) in such a way that a region that represents an environment outside a housing frame (200) of the rinsing device (105) is masked as the image region (300) of the raw camera image (137), and to provide the masked raw camera image (137) as a camera image (152) to an interface to a display means (160) and/or an evaluation means.

2. Image processing device (100) according to claim 1, wherein the masking means (115) is designed to perform object recognition using the image signal (120) in order to detect a movable object imaged by the raw camera image (137) and having a predetermined type.

3. Image processing device (100) according to claim 2, wherein the masking means (115) is designed to mask a region, representing the object, as a further image region when the type characterizes a person.

4. Image processing device (100) according to claim 2 or 3, wherein the masking means (115) is designed not to provide the masked raw camera image (137) when the type characterizes a person.

5. Image processing device (100) according to claim 2 or 3, wherein the masking means (115) is designed to de-mask a region, representing the object, of the raw camera image (137) when the type characterizes a part of the rinsing device (105).

6. Image processing device (100) according to claim 2, wherein the masking means (115) is designed to perform skin colour detection using the image signal (120) and to perform the object recognition using a result of the skin colour detection.

7. Rinsing device (105) having a camera unit (130), arranged in a door (125), and an image processing device (100) according to one of the preceding claims.

8. Rinsing device (105) according to claim 7, having a display means (160) for displaying the camera image (152) and/or an evaluation means for evaluating the camera image (152).

9. Method (1900) for processing a raw camera image (137) of a camera unit (130) arranged in a door (125) of a rinsing device (105), wherein the method comprises the following steps:
reading in (1905) an image signal (120), representing the raw camera image (137), via an interface (135) to a camera unit (130);
reading in (1910) an inclination signal (140), representing an inclination angle of the door (125), via an interface (145) to an inclination sensor (150);
masking (1915) an image region of the raw camera image (137) using the image signal (120) and the inclination signal (140), wherein predefined maskings are applied as a function of the inclination angle (212; 500) of the door (125), which maskings are in each case designed to match the inclination angle (212; 500) of the door (125) in such a way that a region that represents an environment outside a housing frame (200) of the rinsing device (105) is masked as the image region (300) of the raw camera image (137); and
providing (1920) the masked raw camera image (137) as a camera image (152) for a display means (160) and/or for an evaluation means.

10. Computer program product having a program code for carrying out the method (1900) according to one of the preceding claims when the computer program product is executed on a device.

## Revendications

1. Dispositif de traitement d'image (100) permettant de traiter une image brute de caméra (137) d'une unité formant caméra (130) disposée dans une porte (125) d'un appareil de rinçage (105), dans lequel le dispositif de traitement d'image (100) présente les caractéristiques suivantes :
un moyen de lecture (110) qui est configuré pour lire un signal d'image (120) représentant l'image brute de caméra (137) par l'intermédiaire d'une interface (135) avec l'unité formant caméra (130) et qui est configuré pour lire un signal d'inclinaison (140) représentant un angle d'inclinaison (212 ; 500) de la porte (125) par l'intermédiaire d'une interface (145) avec un capteur d'inclinaison (150), et
un moyen de masquage (115) qui est configuré pour masquer au moins une zone d'image (300) de l'image brute de caméra (137) en utilisant le signal d'image (120) et le signal d'inclinaison (140), dans lequel des masquages prédéfinis sont utilisés en fonction de l'angle d'inclinaison (212 ; 500) de la porte (125), lesquels masquages sont respectivement configurés de manière à être adaptés à l'angle d'inclinaison (212 ; 500) de la porte (125), de telle sorte qu'une zone représentant un environnement à l'extérieur d'un cadre de boîtier (200) de l'appareil de rinçage (105) est masquée en tant que zone d'image (300) de l'image brute de caméra (137), et pour fournir l'image brute de caméra (137) masquée en tant qu'image de caméra (152) sur une interface avec un moyen d'affichage (160) et/ou un moyen d'évaluation.

2. Dispositif de traitement d'image (100) selon la revendication 1, dans lequel le moyen de masquage (115) est configuré pour réaliser une reconnaissance d'objet en utilisant le signal d'image (120) afin de reconnaître un objet mobile représenté par l'image brute de caméra (137) et présentant un type prédéterminé.

3. Dispositif de traitement d'image (100) selon la revendication 2, dans lequel le moyen de masquage (115) est configuré pour masquer une zone représentant l'objet en tant qu'autre zone d'image lorsque le type caractérise une personne.

4. Dispositif de traitement d'image (100) selon la revendication 2 ou 3, dans lequel le moyen de masquage (115) est configuré pour ne pas fournir l'image brute de caméra (137) masquée lorsque le type caractérise une personne.

5. Dispositif de traitement d'image (100) selon la revendication 2 ou 3, dans lequel le moyen de masquage (115) est configuré pour arrêter de masquer une zone représentant l'objet de l'image brute de caméra (137) lorsque le type caractérise une partie de l'appareil de rinçage (105).

6. Dispositif de traitement d'image (100) selon la revendication 2, dans lequel le moyen de masquage (115) est configuré pour réaliser une détection de couleur de peau en utilisant le signal d'image (120) et pour réaliser la reconnaissance d'objet en utilisant un résultat de la détection de couleur de peau.

7. Appareil de rinçage (105) comportant une unité formant caméra (130) disposée dans une porte (125) et un dispositif de traitement d'image (100) selon l'une des revendications précédentes.

8. Appareil de rinçage (105) selon la revendication 7, comportant un moyen d'affichage (160) permettant d'afficher l'image de caméra (152) et/ou un moyen d'évaluation permettant d'évaluer l'image de caméra (152).

9. Procédé (1900) permettant de traiter une image brute de caméra (137) d'une unité formant caméra (130) disposée dans une porte (125) d'un appareil de rinçage (105), dans lequel le procédé comprend les étapes suivantes :
lecture (1905) d'un signal d'image (120) représentant l'image brute de caméra (137) par l'intermédiaire d'une interface (135) avec une unité formant caméra (130) ;
lecture (1910) d'un signal d'inclinaison (140) représentant un angle d'inclinaison de la porte (125) par l'intermédiaire d'une interface (145) avec un capteur d'inclinaison (150) ;
masquage (1915) d'une zone d'image de l'image brute de caméra (137) en utilisant le signal d'image (120) et le signal d'inclinaison (140), dans lequel des masquages prédéfinis sont utilisés en fonction de l'angle d'inclinaison (212 ; 500) de la porte (125), lesquels masquages sont respectivement configurés de manière à être adaptés à l'angle d'inclinaison (212 ; 500) de la porte (125), de telle sorte qu'une zone représentant un environnement à l'extérieur d'un cadre de boîtier (200) de l'appareil de rinçage (105) est masquée en tant que zone d'image (300) de l'image brute de caméra (137) ; et
fourniture (1920) de l'image brute de caméra (137) masquée en tant qu'image de caméra (152) pour un moyen d'affichage (160) et/ou pour un moyen d'évaluation.

10. Produit programme informatique comportant un code de programme pour la réalisation du procédé (1900) selon l'une des revendications précédentes lorsque le produit programme informatique est exécuté sur un dispositif.
